# EUROPÄISCHE PATENTSCHRIFT

(11) **EP 1 758 001 B1**
(45) Veröffentlichungstag und Bekanntmachung des Hinweises auf die Patenterteilung: **17.06.2020**
(21) Anmeldenummer: 06015321.0
(22) Anmeldetag: 24.07.2006
(51) Int. Cl.: G05B 19/042

(54) **Verfahren und System zum Abbilden der Struktur einer Automatisierungsanlage auf einem Rechner**
Method and system for mapping the structure of an automation system on a computer
Procédé et système destinés à représenter la structure d'une installation d'automatisation sur un ordinateur

(30) Priorität: 25.08.2005 DE 102005040434
(43) Veröffentlichungstag der Anmeldung: 28.02.2007
(73) Patentinhaber: Phoenix Contact GmbH & Co. KG, 32825 Blomberg (DE)
(72) Erfinder: Krumsiek, Dietmar, 31860 Emmerthal (DE); Kalhoff, Johannes, 32825 Blomberg (DE)
(74) Vertreter: Kampfenkel, Klaus

(56) Entgegenhaltungen:
- DE-A1- 10 254 010
- DE-A1- 10 358 270
- DE-A1- 19 624 929
- US-A- 5 841 654
- US-A1- 2004 230 582
- NEUMANN P ET AL: "Field device integration" EMERGING TECHNOLOGIES AND FACTORY AUTOMATION, 2001. PROCEEDINGS. 2001 8TH IEEE INTERNATIONAL CONFERENCE ON OCT. 15-18, 2001, PISCATAWAY, NJ, USA,IEEE, Bd. 2, 15. Oktober 2001 (2001-10-15), Seiten 63-68, XP010589079 ISBN: 978-0-7803-7241-2

## Beschreibung

Die Erfindung betrifft ein Verfahren sowie ein System zum Parametrieren und Konfigurieren einer Automatisierungsanlage, welche wenigstens ein Kommunikationsnetz und mehrere daran anschaltbare Einrichtungen aufweist.

In DE 196 24 929 A1 wird ein Prozessautomatisierungssystem beschrieben, bei welchem prozessnahe Technologiemodule Mittel zur selbständigen Ausführung vorgegebener Funktionen im Rahmen der Prozessautomatisierung enthalten, wobei zu diesem Zweck modulspezifische Informationen in einem Speicher jedes der Technologiemodule abgelegt sind. Die modulspezifischen Informationen umfassen dabei Informationen über die jeweilige Modulfunktion und über die Einbindung des jeweiligen Moduls in die Mess-, Steuer- und Regelanlage. Während einer Initialisierungsphase werden diese Informationen in eine zentrale Kommunikationseinrichtung übertragen, in der sie für den Zugriff einer Bedien- und Beobachtungseinrichtung abgespeichert werden, so dass diese automatisch der Bedien- und Beobachtungsoberfläche hinzugefügt werden können.

Dokument US 5 841 654 A ist auf ein Verfahren zum netzbasierten Konfigurieren eines digitalen Steuerungssystems gerichtet. Insbesondere offenbart das Dokument die flexible Möglichkeit zur Parametrierung oder Konfigurierung einer Automatisierungsanlage.

Bei Prozess- und Fertigungsanlagen werden regelmäßig herstellerunabhängige Geräte, wie z. B. Sensoren, Aktoren, eingesetzt. Vor einiger Zeit war es noch üblich, das jedes an eine Anlage angeschaltete Gerät einzeln und vor Ort parametriert und konfiguriert werden musste, da zur Parametrierung und Konfiguration keine herstellerunabhängigen Schnittstellen existierten.

Ein Bedürfnis bestand somit darin, herstellerunabhängige Geräte einer Prozess- oder Fertigungsanlage über eine zentrale Einrichtung zu parametrieren und zu verwalten. Hierzu wurde beispielsweise die sogenannte FDT (Field Device Tool)-Technologie entwickelt. Die FDT-Technologie bedient sich spezieller Gerätetreiber, sogenannte DTM (Device Type Manager)-Treiber, mit deren Hilfe die an eine Anlage angeschalteten Geräte angesteuert werden können. Ein Nachteil der die FDT-Technologie unterstützenden Anlagen besteht darin, dass der Rechner, der eine Notebook oder Personal Computer sein kann, über den die Anlage bzw. die daran angeschalteten Geräte konfiguriert werden können, vorab hinsichtlich der Struktur und der Funktionalität der Anlage installiert werden muss.

Der Erfindung liegt somit die Aufgabe zugrunde, ein Verfahren sowie ein System bereit zu stellen, mit welchen eine Automatisierungsanlage über einen beliebigen Rechner, der vorab nicht anlagenspezifisch installiert werden muss, parametriert und konfiguriert werden kann.

Ein Kerngedanke der Erfindung ist darin zu sehen, mit Hilfe von Strukturinformationen die Anlagenstruktur und deren Funktionsstruktur zu beschreiben, wobei die Strukturinformationen innerhalb der Anlage abgelegt sind. Lediglich unter Zuhilfenahme der Strukturinformationen ist es möglich, sich innerhalb einer Anlage zu orientieren sowie Kommunikationspfade zu vorbestimmten Geräten zu öffnen. Die hierzu erforderlichen Kommunikationstreiber, welche sogenannte DTMs sein können, lassen sich beispielsweise aus den Anlagekomponenten oder einer zentralen Speichereinrichtung herunter laden.

Das oben bezeichnete technische Problem wird zum einen durch die Verfahrensschritte des Anspruchs 1 gelöst.

Danach ist ein Verfahren zum Abbilden der Struktur einer Automatisierungsanlage, welche beispielsweise eine Prozess- oder Fertigungsanlage sein kann, auf einem Rechner vorgesehen. Die Automatisierungsanlage weist wenigstens ein Kommunikationsnetz, beispielsweise ein Feldbussystem, Ethernet oder Internet, und mehrere daran anschaltbare Einrichtungen auf. An dieser Stelle sei darauf hingewiesen, dass die Automatisierungsanlage auch ein Hauptnetz und wenigstens ein Unternetz umfassen kann, die nicht homogen sein müssen. Zunächst werden Strukturinformationen, die anlagenspezifische Datenkommunikationsinformationen enthalten, erzeugt. Anlagenspezifische Daten enthalten beispielsweise Informationen über die Struktur, den Aufbau und Ort der Anlage, die Unterteilung der Anlage in Funktionseinheiten, die angeschalteten Geräte und der Standort, das verwendete Netzwerk, die verwendeten Gerätetreiber und/oder deren Speicherplätze und die Bedienoberfläche und/oder deren Speicherplatz, die in einer Art Anlagensuchmaschine enthalten sein kann. So kann die Anlage in verschiedene Funktionsblöcke, wie zum Beispiel in Schweißzellen und Transportbereiche unterteilt werden, die wiederum aus verschiedenen Einrichtungen gebildet werden. Denkbar ist auch, dass Funktionsblöcke hierarchisch aufgebaut sind, wobei jeder Funktionsblock wiederum durch eine oder mehrere Anlagenkomponenten realisiert sein kann. Die Beschreibung der Anlage hinsichtlich ihrer Funktionsblöcke und Unterfunktionsblöcke erfolgt wiederum durch Strukturinformationen. Weiterhin sind in den Strukturinformationen Kommunikationsdaten enthalten, die einem Rechner ermöglichen, mit den Anlagekomponenten oder mit Einrichtungen, die über separate Netze, wie zum Beispiel dem Internet erreichbar sind, zu kommunizieren, indem zum Beispiel vorbestimmte Daten aus den Einrichtungen genutzt, ausgelesen oder in diese eingeschrieben werden. Auf diese Weise können Gerätetreiber für Geräte, die an der Anlage angeschlossen sind, aus der Anlage selbst oder aus entfernten Einrichtungen, zum Beispiel von der Webseite eines Geräteherstellers auf den an die Anlage angeschalteten Rechner heruntergeladen und installiert werden.

Die Strukturinformationen werden dann innerhalb der Automatisierungsanlage gespeichert. Hierbei können die Strukturinformationen zentral in einer Speichereinrichtung oder dezentral in verschiedenen Speichern und/oder den Einrichtungen selbst abgelegt werden. Auswählbare Strukturinformationen werden von der Automatisierungsanlage beispielsweise auf Anfrage oder automatisch zu einem Rechner übertragen, der an die Anlage angeschlossen ist. Unter Ansprechen auf die empfangenen Strukturinformationen werden die Daten zur Abbildung der Struktur der Automatisierungsanlage in den Rechner geladen.

Vorteilhafte Weiterbildungen sind Gegenstand der Unteransprüche.

Mit Hilfe des die Struktur der Anlage abbildenden Rechners kann wenigstens eine Einrichtung angesprochen, parametriert und/oder konfiguriert werden.

Zweckmäßigerweise werden insbesondere während des Betriebs der Anlage Diagnosedaten beispielsweise in den an die Anlage angeschalteten Einrichtungen und Fehlerinformationen der Automatisierungsanlage erzeugt und zum Rechner übertragen und dort dargestellt.

Einrichtungsspezifische Daten werden in den jeweiligen Einrichtungen und/oder in einer Speichereinrichtung der Automatisierungsanlage abgelegt und unter Ansprechen auf die Strukturinformationen zum Rechner übertragen. Bei den einrichtungsspezifischen Daten kann es sich um Gerätetreiber, insbesondere um DTM-Treiber, handeln.

Eine anlagenspezifische Bedienoberfläche kann in einem Speicher der Automatisierungsanlage abgelegt und im Bedarfsfall zum angeschalteten Rechner übertragen werden.

Das oben genannte technische Problem wird ebenfalls durch die Merkmale des Anspruchs 6 gelöst.

Danach ist ein System zum Abbilden der Struktur und insbesondere zum Parametrieren und Konfigurieren einer Automatisierungsanlage vorgesehen.

Die Erfindung wird nachstehend anhand eines Ausführungsbeispiels in Verbindung mit einer beiliegenden Zeichnungen näher erläutert.

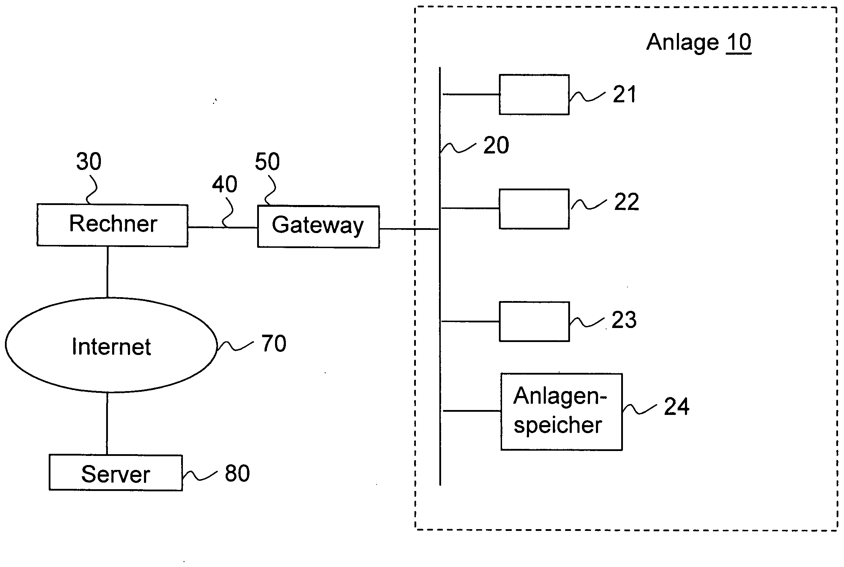

Die einzige Figur zeigt eine beispielhafte Automatisierungsanlage 10, die als Kommunikationsnetz 20 zum Beispiel einen Feldbus verwendet. An den Feldbus sind beispielsweise eine übergeordnete Steuereinrichtung 21, ein Sensor 22, ein Schweißroboter 23 sowie ein Anlagenspeicher 24 angeschlossen. Der Sensor 22 und der Schweißroboter 23 bilden für die vorliegende Anlage 10 eine Funktionseinheit 25. An dieser Stelle sei angemerkt, dass die Anlage 10 selbstverständlich weitere Funktionseinheiten, welche auch Unterfunktionseinheiten aufweisen können, enthalten kann. Die an die Automatisierungsanlage 10 angeschalteten Komponenten 21 bis 23 können über einen externen Rechner 30 parametriert und konfiguriert werden. Hierzu kann der Rechner 30 beispielsweise über eine Ethernetverbindung 40 mittels eines Gateways 50 an den Feldbus 20 der Anlage 10 angeschaltet werden. Grundsätzlich ist es denkbar, den Rechner 30 an jeder beliebigen Stelle an die Anlage anzuschalten. Demzufolge kann der Rechner 30 über einen Proxy oder auch über einen Internetanschluss mit der Anlage verbunden werden. Ferner kann der Rechner 30 über das Internet 70 beispielsweise mit einem Server 80 des Herstellers des Schweißroboters 23 verbunden werden. Auf diese Weise kann der Rechner 30 zum Beispiel den Gerätetreiber des Schweißroboters 23 von der Webseite des Geräteherstellers herunterladen.

Gemäß dem Ausführungsbeispiel sind in dem Anlagespeicher 24 Strukturinformationen abgelegt, die die Anlage 10 insbesondere hinsichtlich deren Standort, der Anlagenfunktion, dem Typ und Standort der angeschalteten Geräte, der Kommunikationsmittel, der Verkabelungsstruktur, der Kommunikationspfade und der verwendeten Kommunikations- und Gerätetreiber und deren Speicherort beschreiben. So weist die Strukturinformation beispielsweise darauf hin, dass der Gerätetreiber des Schweißroboters 23 auf dem Server 80 des Geräteherstellers liegt.

Die Strukturinformationen dienen vornehmlich dazu, einer Bedienperson zu ermöglichen, mit Hilfe des Rechners 30 durch die Anlage 10 zu navigieren und je nach Bedarf spezielle Kommunikationspfade zu den an den Feldbus 20 angeschalteten Komponenten oder zu externen Einrichtungen, wie zum Beispiel zu der auf dem Server 80 hinterlegten Webseite des Herstellers des Schweißroboters 23, aufzubauen, um die zur Abbildung der Anlage 10 erforderlichen Daten zu erhalten. Ferner kann die Bedienperson dann über den Rechner 30 die am Feldbus 20 angeschalteten Einrichtungen 21 bis 23 ansprechen, parametrieren und/oder konfigurieren.

Ferner ist denkbar, dass die Daten einer graphischen Bedienoberfläche ebenfalls in dem Anlagenspeicher 24 hinterlegt sind. Die gerätespezifische Beschreibung des Sensors 22 und des Schweißroboters 23 kann ebenfalls im Anlagenspeicher 24, in dem jeweiligen Gerät selbst oder hinsichtlich des Schweißroboters 23 im Server 80 hinterlegt sein. Unter Ansprechen auf die entsprechenden Strukrurinformationen holt sich der Rechner 30 die jeweiligen Daten aus dem Anlagenspeicher 24 oder vom Server 80, um die Struktur der Anlage 10 zu erstellen.

Auf dem Rechner 30 muss keine spezielle Software vorab installiert werden, um die Anlage 10 abbilden, konfigurieren und/oder parametrieren zu können. Mit anderen Worten kann jeder beliebige Rechner verwendet werden, der im vorliegenden Beispiel lediglich eine Netzkarte zum Anschalten an das Ethernet und Internet 70 aufweist. Das Gateway 50 ist im vorliegenden Beispiel derart implementiert, dass der Rechner 30 automatisch mit dem Anlagenspeicher 24 verbunden wird. Die im Anlagenspeicher 24 hinterlegten Strukturinformationen sowie die hinterlegte graphische Bedienoberfläche werden dann ausgelesen und zum Rechner 30 übertragen. Mit Hilfe der übertragenen Strukturinformationen kann der Rechner 30 sowohl die übergeordnete Steuereinrichtung 21 als auch den Sensor 22, den Schweißroboter 23 und den Server 80 ansprechen, um beispielsweise die in dem Sensor 22 und dem Server 80 hinterlegten Gerätetreiber auszulesen und herunter zu laden.

Mit Hilfe der Strukturinformationen ist es ebenfalls möglich, passwortgesicherte Pfade zu vorbestimmten, zugriffsgeschützte Einrichtungen, beispielsweise zum Sensor 22, aufzubauen. Demzufolge muss zunächst ein vereinbartes Passwort oder dergleichen am Rechner 30 eingegeben werden, bevor eine Verbindung zwischen dem Rechner 30 und dem Sensor 22 hergestellt werden kann.

Ferner ist es denkbar, in der Strukturinformation sicherheitstechnische Applikationen zu beschreiben. Auf diese Weise kann ein gesicherter Kommunikationspfad vom Rechner 30 zu einer bestimmten Komponente, beispielsweise zu einem nicht dargestellten Lichtgitter, hergestellt werden. Das Lichtgitter kann ebenfalls über den Rechner 30 parametriert und konfiguriert werden.

## Patentansprüche

1. Verfahren zum Abbilden der Struktur einer Automatisierungsanlage (10) auf einem Rechner (30), die wenigstens ein Kommunikationsnetz (20) und mehrere daran anschaltbare Einrichtungen (21-24) aufweist, mit folgenden Schritten:
Strukturinformationen, die anlagenspezifische Daten und Kommunikationsinformationen enthalten, werden erzeugt,
wobei die anlagenspezifischen Daten Informationen über die Struktur der Anlage, und/oder den Aufbau und Ort der Anlage, und/oder die Unterteilung der Anlage in Funktionseinheiten, und/oder die angeschalteten Geräte und deren Standort, und/oder das verwendete Netzwerk,
und/oder die verwendeten Gerätetreiber und/oder deren Speicherplätze, und/oder die Bedienoberfläche und/oder deren Speicherplatz enthalten;
die Strukturinformationen werden in der Automatisierungsanlage (10, 24) gespeichert;
wenigstens ein Rechner (30) wird an die Automatisierungsanlage (10) angeschlossen;
vorbestimmbare Strukturinformationen werden von der Automatisierungsanlage (10) zum Rechner (30) übertragen; und
unter Ansprechen auf die empfangenen Strukturinformationen werden die Daten zur Abbildung der Struktur der Automatisierungsanlage (10) in den Rechner geladen, und es wird
wenigstens eine Einrichtung (21, 22, 23) mit Hilfe des Rechners (30) angesprochen und parametriert und/oder konfiguriert.

2. Verfahren nach Anspruch 1,
**dadurch gekennzeichnet, dass**
Diagnosedaten und Fehlerinformationen der Automatisierungsanlage (10) erzeugt und zum Rechner (30) übertragen und dort dargestellt werden.

3. Verfahren nach Anspruch 1 oder 2,
**dadurch gekennzeichnet, dass** einrichtungsspezifische Daten in den jeweiligen Einrichtungen und/oder in einer Speichereinrichtung (24) der Automatisierungsanlage (10) abgelegt sind und unter Ansprechen auf die Strukturinformationen zum Rechner übertragen werden.

4. Verfahren nach Anspruch 3,
**dadurch gekennzeichnet, dass**
die einrichtungsspezifischen Daten Gerätetreiber, insbesondere DTM (Device Type Manager)-treiber sind.

5. Verfahren nach einem der Ansprüche 1 bis 4,
**dadurch gekennzeichnet, dass**
in einem Speicher der Automatisierungsanlage eine Bedienoberfläche abgelegt wird, die zum Rechner übertragen werden kann.

6. System zum Abbilden der Struktur einer Automatisierungsanlage (10) auf einem Rechner (30), welche wenigstens ein Kommunikationsnetz (20) und mehrere daran angeschaltete Einrichtungen (21-24) aufweist, mit
wenigstens einem Rechner (30), der mit der Automatisierungsanlage (10) verbunden ist,
eine innerhalb der Automatisierungsanlage vorgesehene Speichereinrichtung (21-24) zum Speichern von Strukturinformationen, die anlagenspezifische Daten und Kommunikationsinformationen enthalten, wobei die anlagenspezifischen Daten Informationen über die Struktur der Anlage, und/oder den Aufbau und Ort der Anlage, und/oder die Unterteilung der Anlage in Funktionseinheiten, und/oder die angeschalteten Geräte und deren Standort, und/oder das verwendete Netzwerk, und/oder die verwendeten Gerätetreiber und/oder deren Speicherplätze, und/oder die Bedienoberfläche und/oder deren Speicherplatz enthalten, und wobei
der Rechner (30) zum Laden der Strukturinformationen und zum Laden von Daten zur Abbildung der Struktur der Automatisierungsanlage (10) unter Ansprechen auf wenigstens einige der Strukturinformationen ausgebildet ist, und der Rechner (30) zum Ansprechen und zum Parametrieren und/oder Konfigurieren wenigstens einer Einrichtung ausgebildet ist.

7. System nach Anspruch 6,
**dadurch gekennzeichnet, dass**
die Leiteinrichtung (30) über ein Gateway (50) an die Anlage (10) anschaltbar ist.

## Claims

1. A method for mapping the structure of an automation system (10) on a computer (30), the automation system comprising at least one communication network (20) and a plurality of devices (21 - 24) connectable thereto, comprising the steps of:
generating structural information containing system-specific data and communication information, wherein the system-specific data contain information about the structure of the system, and/or the configuration and location of the system, and/or the division of the system into functional units, and/or the connected devices and their location, and/or the network used, and/or the device drivers used and/or storage locations thereof, and/or the user interface and/or storage location thereof;
storing the structural information in the automation system (10, 24);
connecting at least one computer (30) to the automation system (10);
transferring predeterminable structural information from the automation system (10) to the computer (30); and in response to the structural information received, loading into the computer the data for mapping the structure of the automation system (10); and
using the computer (30) for addressing and parameterizing and/or configuring at least one device (21, 22, 23).

2. The method according to claim 1, **characterized in that** diagnostic data and error information of the automation system (10) are generated and transferred to the computer (30) to be displayed there.

3. The method according to claim 1 or 2, **characterized in that**
device-specific data are stored in the respective devices and/or in a memory device (24) of the automation system (10) and are transferred to the computer in response to the structural information.

4. The method according to claim 3, **characterized in that** the device-specific data are device drivers, in particular DTM (Device Type Manager) drivers.

5. The method according to any one of claims 1 to 4, **characterized in that**
a user interface is stored in a memory of the automation system and can be transferred to the computer.

6. A system for mapping the structure of an automation system (10) on a computer (30), the automation system comprising at least one communication network (20) and a plurality of devices (21 - 24) connected thereto, comprising
at least one computer (30) connected to the automation system (10);
a storage device (21 - 24) provided within the automation system for storing structural information containing system-specific data and communication information, wherein the system-specific data contain information about the structure of the system, and/or the configuration and location of the system, and/or the division of the system into functional units, and/or the connected devices and their location, and/or the network used, and/or the device drivers used and/or storage locations thereof, and/or the user interface and/or storage location thereof; and wherein
the computer (30) is adapted for loading the structural information and for loading data for mapping the structure of the automation system (10) in response to at least some of the structural information; and the computer (30) is adapted to address and parameterize and/or configure at least one device.

7. The system according to claim 6, **characterized in that**
the control device (30) can be connected to the system (10) via a gateway (50).

## Revendications

1. Procédé de représentation de la structure d'une installation d'automatisation (10) sur un ordinateur (30), qui comprend au moins un réseau de communication (20) et plusieurs dispositifs (21-24) pouvant y être raccordés, avec les étapes suivantes :
des informations concernant la structure qui contiennent les données spécifiques à l'installation et des informations de communication sont générées, où les données spécifiques aux installations contiennent des informations concernant la structure de l'installation et/ou la composition et le lieu de l'installation et/ou la division de l'installation en unités fonctionnelles et/ou les appareils branchés et leur emplacement et/ou le réseau utilisé et/ou les pilotes d'appareils utilisés et/ou leurs emplacements mémoires et/ou l'interface utilisateur et/ou son emplacement mémoire ;
les informations concernant la structure sont enregistrées dans l'installation d'automatisation (10, 24) ;
au moins un ordinateur (30) est branché à l'installation d'automatisation (10) ;
des informations de structure pouvant être prédéterminées sont transmises de l'installation d'automatisation (10) à l'ordinateur (30) ; et
en réponse aux informations de structure reçues, les données pour la représentation de la structure de l'installation d'automatisation (10) sont chargées dans l'ordinateur et au moins un dispositif (21, 22, 23) est sollicité et paramétré et/ou configuré à l'aide de l'ordinateur (30).

2. Procédé selon la revendication 1, **caractérisé en ce que**
des données de diagnostic et des informations d'erreurs de l'installation d'automatisation (10) sont générées et transmises à l'ordinateur (30) et y sont représentées.

3. Procédé selon la revendication 1 ou 2, **caractérisé en ce que**
des données spécifiques aux dispositifs sont enregistrées dans les dispositifs respectifs et/ou dans un dispositif d'enregistrement (24) de l'installation d'automatisation (10) et sont transmises à l'ordinateur en réponse aux informations de structure.

4. Procédé selon la revendication 3, **caractérisé en ce que**
les données spécifiques aux dispositifs sont des pilotes d'appareils, plus particulièrement des pilotes DTM (Device Type Manager).

5. Procédé selon des revendications 1 à 4, **caractérisé en ce que**
dans une mémoire de l'installation d'automatisation, est enregistrée une interface utilisateur qui peut être transmise à l'ordinateur.

6. Système pour la représentation de la structure d'une installation d'automatisation (10) sur un ordinateur (30), qui comprend au moins un réseau de communication (20) et plusieurs dispositifs (21-24) pouvant y être raccordés, avec
au moins un ordinateur (30) qui est relié à l'installation d'automatisation (10),
un dispositif d'enregistrement (21-24) prévu à l'intérieur de l'installation d'automatisation pour l'enregistrement d'informations de structure qui contiennent des données spécifiques à l'installation et des informations de communication, où les données spécifiques à l'installation contiennent des informations concernant la structure de l'installation et/ou la composition et le lieu de l'installation et/ou la division de l'installation en unités fonctionnelles et/ou les appareils branchés et leur emplacement et/ou le réseau utilisé et/ou les pilotes d'appareils utilisés et/ou leurs emplacements mémoires et/ou l'interface utilisateur et/ou son emplacement mémoire et où
l'ordinateur (30) est conçu pour le chargement des informations de structure et pour le chargement de données pour la représentation de la structure de l'installation d'automatisation (10) en réponse à au moins certaines des informations de structure, et l'ordinateur (30) est conçu pour la sollicitation et pour le paramétrage et/ou la configuration d'au moins un dispositif.

7. Système selon la revendication 6, **caractérisé en ce que**
le dispositif directeur (30) peut être branché à l'installation (10) par l'intermédiaire d'une passerelle (50) .
